(19) Europäisches Patentamt
European Patent Office
Office européen des brevets

(11) EP 4 682 190 A1

(12) **EUROPEAN PATENT APPLICATION**
published in accordance with Art. 153(4) EPC

(43) Date of publication:
**21.01.2026 Bulletin 2026/04**

(21) Application number: **24770201.2**

(22) Date of filing: **22.01.2024**

(51) International Patent Classification (IPC):
***C08J 9/04*** *(2006.01)* ***C08L 45/00*** *(2006.01)*

(52) Cooperative Patent Classification (CPC):
**C08J 5/18; C08J 9/0061; C08J 9/122; C08L 45/00;**
C08J 2201/034; C08J 2203/06; C08J 2205/044; C08J 2205/052; C08J 2345/00; C08J 2445/00

(86) International application number:
**PCT/JP2024/001658**

(87) International publication number:
**WO 2024/190079 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.03.2023 JP 2023041161**

(71) Applicant: **FURUKAWA ELECTRIC CO., LTD.**
**Tokyo 100-8322 (JP)**

(72) Inventors:
- **OKITA, Yutaka**
  **Tokyo 100-8322 (JP)**
- **YAMAMOTO, Syunji**
  **Tokyo 100-8322 (JP)**
- **UNNO, Taro**
  **Tokyo 100-8322 (JP)**
- **FUJII, Yoshito**
  **Tokyo 100-8322 (JP)**

(74) Representative: **Goddar, Heinz J.**
**Boehmert & Boehmert**
**Anwaltspartnerschaft mbB**
**Pettenkoferstrasse 22**
**80336 München (DE)**

(54) **CYCLIC OLEFIN-BASED POLYMER RESIN FOAMED SHEET**

(57) The purpose of the present invention is to provide a cyclic olefin-based polymer resin foamed sheet with which the stability of mechanical properties or thermal properties is maintained and excellent light reflection characteristics, dielectric characteristics (low relative dielectric constant, low dielectric loss tangent), and surface quality are achieved. According to the present invention, a cyclic olefin-based polymer resin foamed sheet is obtained, which is characterized by comprising a cyclic olefin homo-polymer (A), a cyclic olefin copolymer (B), or a mixture of the cyclic olefin homo-polymer (A) and the cyclic olefin copolymer (B) and having an average foam diameter of 1-20 μm. Consequently, a cyclic olefin-based polymer resin foamed sheet having excellent light reflection characteristics, dielectric characteristics (low relative dielectric constant, low dielectric loss tangent), and surface quality can be obtained.

EP 4 682 190 A1

## Description

TECHNICAL FIELD OF THE INVENTION

The present invention relates to a cyclic olefin-based polymer resin foamed sheet.

BACKGROUND OF THE INVENTION

Cyclic olefin-based resin is superior to conventional acyclic olefin-based resin in thermal stability, chemical stability, and physical properties such as elastic modulus, and thus cyclic olefin-based resin has been widely used in fields such as in optics for optical films etc., in the fields of packaging material, medical testing equipment, electronic device, and so on. Also in the field of foamed bodies, various resin-foamed bodies with cyclic olefin being used as base resin have been proposed.

Patent Document 1 discloses cyclic polyolefin resin with porosity of 95% or more, which is obtained by gas foaming. Patent Document 1 states that this can provide resin-foamed body that is excellent in heat insulation performance and environmental performance as well as moisture and heat resistance. With regard to foam diameters, Patent Document 1 discloses foam-diameter distribution with a peak between 36 μm and 80 μm.

Patent Document 2 discloses a cycloolefin copolymer derived from a norbornene-based compound obtained by crosslinking and foaming. Patent Document 2 describes that the copolymer has high resistance to warm and hot water and does not absorb water due to its chemical structure, which makes the copolymer particularly suitable for such uses. With regard to an average foam diameter, the copolymer with foam diameters between approximately 40 μm and 200 μm has been disclosed.

Patent Document 3 discloses an ethylene/cyclic olefin random copolymer made by copolymerizing ethylene, which is obtained by injection foaming using carbon dioxide, and a norbornene-based compound. Patent Document 3 describes that this can provide a cyclic olefin-based resin-foamed body that is excellent in rigidity, heat resistance, heat aging resistance, chemical resistance, solvent resistance, dielectric characteristics, and the like, as well as that demonstrates vibration damping in a wide range of temperature and excels in heat resistance. There is no description regarding the foam diameter of the foamed body.

Patent Document 4 discloses a coaxial cable with a foaming degree between 80% and 90%. A resin composition including cyclic olefin-based resin, low-density polyethylene, and/or straight-chain low-density polyethylene, obtained by extrusion foaming with nitrogen gas, is applied to a material for an insulation layer of the coaxial cable. Patent Document 4 describes that this can provide the coaxial cable with the insulation layer having a side-pressure resistance that is sufficient to be used in the coaxial cable, and a high degree of foaming of the insulation layer. Also, it is described that the high degree of foaming of the insulation layer in the coaxial cable can reduce dielectric loss tangent and relative dielectric constant of the insulation layer, which enables the coaxial cable to be used suitably as a high-frequency coaxial cable.

Patent Document 5 discloses a method for making cyclic olefin-based resin-foamed particles, in which the foam particles for in-mold molding are made by foaming foamable particles including cyclic olefin-based resin as base resin and an inorganic physical foaming agent. Patent Document 5 describes that this can provide a foam molded body with good appearance. There is no description of the foam diameter.

RELATED ART

PATENT DOCUMENTS

[Patent Document 1] Japanese Unexamined Patent Application Publication No. 2013-189484 (JP-A-2013-189484)
[Patent Document 2] Japanese Translation of PCT International Application Publication for Patent Application No. 11-514680 (JP-T-11-514680)
[Patent Document 3] Japanese Unexamined Patent Application Publication No. 11-100454 (JP-A-11-100454)
[Patent Document 4] International Patent Publication WO2009/041116
[Patent Document 5] Japanese Unexamined Patent Application Publication No. 2017-179238 (JP-A- 2017-179238)

SUMMARY OF THE INVENTION

(PROBLEMS TO BE SOLVED BY THE INVENTION)

On the other hand, due to its molecule structure, the cyclic olefin-based resin has exceptionally low relative

dielectric constant and dielectric loss tangent, and thus it is expected that the cyclic olefin-based resin is used specifically as a material for high frequency components. Particularly, it is expected that a foamed body thereof is applied to terahertz wave components, which are to expand in the future. However, if the same low dielectric characteristics are to be demonstrated for terahertz waves, micro-foamed micro foams are to be awaited.

Thus, an object of the present invention is to provide a cyclic olefin polymer resin foamed sheet that can achieve excellent light reflection and dielectric characteristics (low relative dielectric constant and low dielectric loss tangent) with excellent surface quality, while maintaining stability in mechanical and thermal properties.

(MEANS FOR SOLVING PROBLEMS)

Studies have been made in view of the above object, and it is found out that forming micro foams having a specific average foam diameter or less in a resin sheet can satisfy the expected properties mentioned above. The present invention has been made based on such findings.

That is, the present invention provides a cyclic olefin polymer resin foamed sheet with an average foam diameter of 20 μm or less, including any of a simple substance of a cyclic olefin homo-polymer (A), a simple substance of a cyclic olefin copolymer (B), or a mixture of the cyclic olefin homo-polymer (A) and the cyclic olefin copolymer (B).

The cyclic olefin copolymer (B) may be a cyclic olefin elastomer, and 1 - 20 pts.mass of the cyclic olefin elastomer may be added to 100 pts.mass of the cyclic olefin homo-polymer (A) in the cyclic olefin-based polymer resin foamed sheet.

In the cyclic olefin-based polymer resin foamed sheet, the cyclic olefin homo-polymer (A) or the cyclic olefin copolymer (B) may have repeated units represented by any of the following formulas: (a3), (b3), (c2), (d1), (e3), and (f3).

[CHEMICAL FORMULA 1]

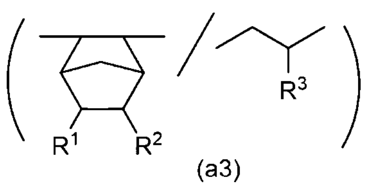

(a3)

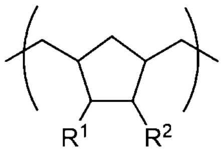

(b3)

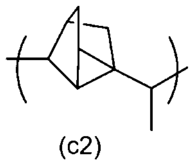

(c2)

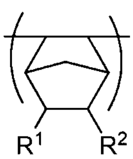

(d1)

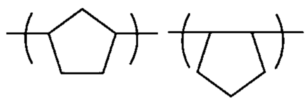

(e3)

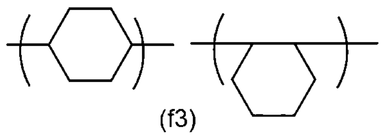

(f3)

In the formulas, $R^1$ and $R^2$ may be, independently and respectively, a hydrogen atom, an alkyl group of 1 - 10 carbon atoms, an alkenyl group of 2 - 10 carbon atoms, an alkynyl group of 2 - 10 carbon atoms, an aryl group of 6 - 18 carbon atoms, a hydroxyl group, a halogen atom, or a carboxyl group, and $R^1$ and $R^2$ may be bound together to form a ring. In the formulas, $R^3$ may be a hydrogen atom, an alkyl group of 1 - 10 carbon atoms, an alkenyl group of 2 - 10 carbon atoms, an alkynyl group of 2 - 10 carbon atoms, an aryl group of 6 - 18 carbon atoms, a hydroxyl group, a halogen atom, a carboxyl group, an acyl group of 2 - 12 carbon atoms, or an alkyloxycarbonyl group of 2 - 12 carbon atoms.

In the cyclic olefin-based resin foamed sheet, the cyclic olefin homo-polymer (A) or the cyclic olefin copolymer (B) may have repeated units represented by any of the following formulas: (b3-1) - (b3-7).

[CHEMICAL FORMULA 2]

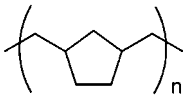
(b3-1)

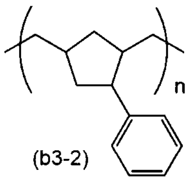
(b3-2)

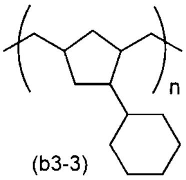
(b3-3)

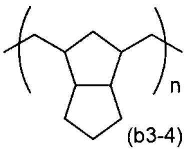
(b3-4)

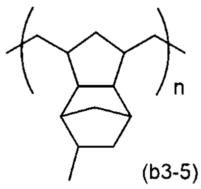
(b3-5)

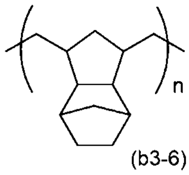
(b3-6)

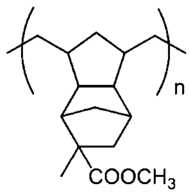
(b3-7)

In the cyclic olefin-based polymer resin foamed sheet, the cyclic olefin polymer (A) may be a crystalline olefin polymer.

The cyclic olefin-based polymer resin foamed sheet may have a relative dielectric constant of 1.10 - 2.00 and a dielectric loss tangent satisfying a range between $0.5\times10^{-4}$ and $4.5\times10^{-4}$, in which the relative dielectric constant and the dielectric loss tangent are measured at a measuring frequency of 2 GHz by using a cavity resonator perturbation method.

Also, total reflectance of the cyclic olefin-based polymer resin foamed sheet may be 90% or more when reflectance of an aluminum oxide reflector in a visible light range at a wavelength of 555 nm is 100%.

Also, the cyclic olefin-based polymer resin foamed sheet may satisfy that an average of arithmetic mean surface roughness Ra in a MD direction and in a TD direction of the cyclic olefin-based polymer resin foamed sheet is 0.50 μm or less.

The cyclic olefin-based polymer resin foamed sheet may be applied to housings for electrical/electronic components, electrical insulating materials, sealing materials, protector materials, high frequency substrates, or substrates for electromagnetic wave control components.

The cyclic olefin-based polymer resin foamed sheet may be applied to a light reflector of a lighting device.

Applications of the cyclic olefin-based polymer resin foamed sheet may include housings for electrical/electronic components, electrical insulating materials, sealing materials, protector materials, high frequency substrates, or substrates for electromagnetic wave control components. The application of the cyclic olefin-based polymer resin foamed sheet may also include a light reflector of a lighting device.

(EFFECTS OF THE INVENTION)

The present invention can provide a cyclic olefin-based polymer resin foamed sheet that can achieve excellent light reflection and dielectric characteristics (low relative dielectric constant and low dielectric loss tangent) with excellent surface quality while maintaining stability in mechanical and thermal properties, and a method for making the same.

DESCRIPTION OF SOME EMBODIMENTS

While having a glass transition temperature and transparency equivalent to polycarbonate, cyclic olefin polymers (COP) and cyclic olefin copolymers (COC) have a low moisture absorption rate like polyolefin as well as extremely excellent dielectric characteristics, and thus are especially useful for optical and electrical/electronic materials. The present invention relates to a resin foamed sheet using the cyclic olefin polymers and cyclic olefin copolymers.

The cyclic olefin polymer resin foamed sheet of the present invention includes any of a simple substance of a cyclic olefin homo-polymer (A), a simple substance of a cyclic olefin copolymer (B), or a mixture of the cyclic olefin homo-polymer (A) and the cyclic olefin copolymer (B). Hereinafter, such the cyclic olefin polymer resin foamed sheet will be described.

(Cyclic Olefin Polymer)

Cyclic olefin homo-polymers (COP) or cyclic olefin copolymers (COC) are homo-polymers or copolymers that are synthesized from cyclic olefin as a raw material and have an alicyclic structure in a chain. In the present description, homo-polymers and copolymers may be referred to simply as polymers. For example, cyclic olefin polymers may also mean cyclic olefin homo-polymers and cyclic olefin copolymers. The cyclic olefin polymers that may be used in the present

invention are preferably polymers (homo-polymers or copolymers) obtained from norbornenes or cycloalkadiennes as raw materials. Typical examples include homo-polymers or copolymers obtained from the following formulas (I) to (VI). When referring to cyclic olefin polymer resin, cyclic olefin polymer resin may be referred not only to those including cyclic olefin polymers alone but also to a mixture of cyclic olefin polymers and other polymers, or a composition with additives.

[CHEMICAL FORMULA 3]

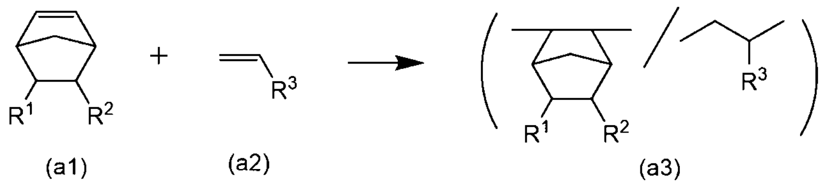
(a1) (a2) (a3) (I)

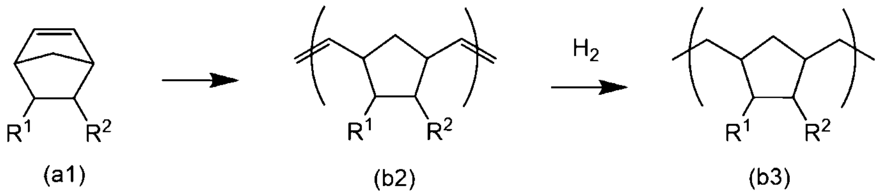

(a1) (b2) (b3) (II)

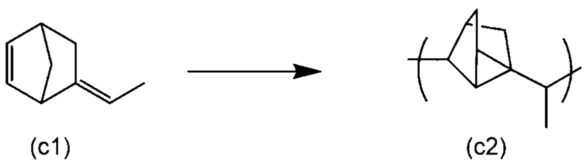
(c1) (c2) (III)

[CHEMICAL FORMULA 4]

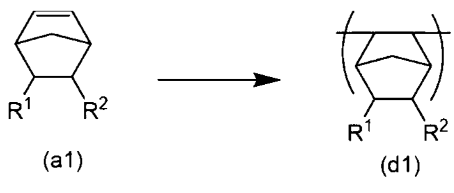
(a1) (d1) (IV)

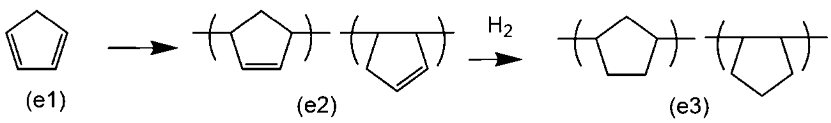

(e1) (e2) (e3) (V)

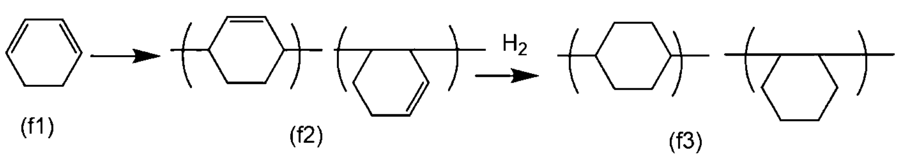

(f1) (f2) (f3) (VI)

In formula (I) above, a norbornene-based addition copolymer represented by formula (a1) is obtained. In formula (II), a norbornene-based hydrogenated ring-opening metathesis polymer of formula (a1) is obtained. In formula (III), an alkylidene-norbornene-based transannular polymer of formula (c1) is obtained. In formula (IV), a norbornene-based addition polymer (d1) represented by formula (a1) is obtained. In formula (V), a polymeric hydrogenated polymer of cyclopentadiene represented by formula (e1) is obtained. In formula (VI), a polymeric hydrogenated polymer of cyclohexadiene represented by formula (f1) is obtained. In formulas (I) - (IV) in the present description, polymers based on norbornene are sometimes referred to as norbornene-based resin.

In the formulas, $R^1$ and $R^2$ are, independently and respectively, a hydrogen atom, an alkyl group of 1 - 10 carbon atoms, an alkenyl group of 2 - 10 carbon atoms, an alkynyl group of 2 - 10 carbon atoms, an aryl group of 6 - 18 carbon atoms, a hydroxyl group, a halogen atom, or a carboxyl group, and $R^1$ and $R^2$ may be bound together to form a ring. In formula (a1), compounds in which $R^1$ and $R^2$ form a ring include dicyclopentadiene. Rings formed by bonding together $R^1$ and $R^2$ may be cyclopentane rings and norbornane rings having an alkyl group with 1 - 3 carbon atoms or a carboxyl group.

In the formulas, $R^3$ may be a hydrogen atom, an alkyl group of 1 - 10 carbon atoms, an alkenyl group of 2 - 10 carbon atoms, an alkynyl group of 2 - 10 carbon atoms, an aryl group of 6 - 18 carbon atoms, a hydroxyl group, a halogen atom, a carboxyl group, an acyl group of 2 - 12 carbon atoms, or an alkyloxycarbonyl group (preferably with 2- 12 carbon atoms, more preferably with 2- 6 carbon atoms, and furthermore preferably with 2 or 3 carbon atoms).

The parts of $R^1$, $R^2$, and $R^3$ may have any substituent groups.

Polymers used in the invention of the present application may include a cyclic olefin copolymer represented by formula (a3) above, a cyclic olefin homo-polymer represented by formula (b3), a cyclic olefin homo-polymer represented by formula (c2), a cyclic olefin homo-polymer represented by formula (d1), a cyclic olefin copolymer represented by formula (e3), and a cyclic olefin copolymer represented by formula (f3), among which the cyclic olefin copolymer represented by formula (a3) above, the cyclic olefin homo-polymer represented by formula (b3), and the cyclic olefin homo-polymer represented by formula (d1) are preferable, and the cyclic olefin homo-polymer represented by formula (b3) is more preferable.

It is preferable that the norbornene-based hydrogenated ring-opening metathesis polymer of formula (b3) is a polymer including structure units represented by the following (b3-1) to (b3-7).

[CHEMICAL FORMULA 5]

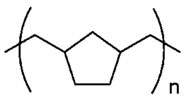
(b3-1)
(NB)

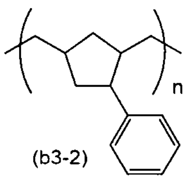
(b3-2)

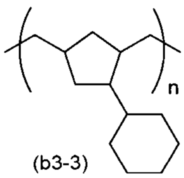
(b3-3)

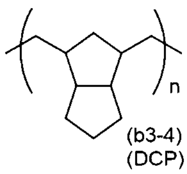
(b3-4)
(DCP)

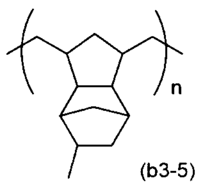
(b3-5)

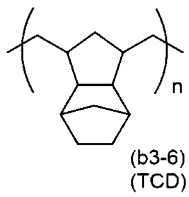
(b3-6)
(TCD)

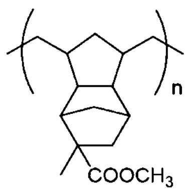
(b3-7)

Crystallinity and Tg (Tm) of each compound are as follows.

| Compound No. | Crystallinity | Tg (Tm) | Transparency | Abbreviation |
|---|---|---|---|---|
| b3-1 | Crystalline | 134°C | Opaque | NB |
| b3-2 | Amorphous | 75°C | Transparent | |
| b3-3 | Amorphous | 86°C | Transparent | |
| b3-4 | Amorphous | 96°C | Transparent | DCP |
| b3-5 | Amorphous | 150°C | Transparent | |
| b3-6 | Amorphous | 162°C | Transparent | TCP |
| b3-7 | Amorphous | 171°C | Transparent | |

Examples of COP and COC polymers mentioned above can be found in the following documents.

- Yosuke HARAUCHI et al., "Development Trend of Cyclo-olefin Polymers (Zeon Corporation)", The society of polymer science, Japan, Kobunshi Ronbunshu Vol. 75, No. 6 PP477 - 485 (Nov., 2018) https://www.jstage.jst.go.jp/article/koron/75/6/75_2018-0025/_pdf
- Teiji KOHARA, "Development and Application of Cyclo-olefin Polymers", Kobunshi Vol. 57 August, (2008) https://www.jstage.jst.go.jp/article/kobunshil952/57/8/57_8_613/_pdf
- Teiji KOHARA, "Development and Practical Application of Cyclo-olefin Polymers", Polyimides and Aromatic Polymers, Recent Advances 2008 http://fibertech.or.jp/JPIC/pdf/2008_04.pdf


Specific products of cyclic olefin homo-polymers include polymers obtained by ring-opening polymerization of norbornene. Trade names of hydrogenated ring-opening polymers of norbornene-based monomers (formulas b3-1 to b3-7) include "ZEONEX (registered trademark, by Zeon Corporation), ZEONOR (registered trademark, by Zeon Corporation), and ARTON (registered trademark, by JSR Corporation). For cyclic olefin copolymers, trade names of addition polymers of norbornene-based monomers and ethylene (formula a-3) include APEL (registered trademark, by Mitsui Chemicals, Inc.) and TOPAS (registered trademark, by POLYPLASTICS CO., LTD.).

The resin foamed sheet of the present invention includes any of the cyclic olefin homo-polymer (A), the cyclic olefin copolymer (B), and the mixture of the cyclic olefin homo-polymer (A) and the cyclic olefin copolymer (B). In a case of the mixture, the cyclic olefin copolymer (B) is preferably an elastomer (exhibiting rubber elasticity at room temperature). If the cyclic olefin-based polymer resin foamed sheet includes the mixture of the cyclic olefin homo-polymer (A) and the cyclic olefin copolymer (B), an amount of the cyclic olefin copolymer to be added is preferably 1 - 20 pts.mass to 100 pts.mass of the cyclic olefin homo-polymer (A). Alternatively, the cyclic olefin-based polymer resin foamed sheet can include the cyclic olefin copolymer (B) alone.

The cyclic olefin polymer resin foamed sheet used in the present invention may also be used as a resin foamed sheet formed of a resin composition combined with functional additives. For example, flame retardants, viscosity modifiers, antimicrobial and antifungal agents, hydrophilic and lipophilic modifiers, form stabilizers, antistatic agents, coloring agents, etc. may be added. The amount of additives is not particularly limited, though when being added, the additives may be added to an extent not to interfere with properties of the cyclic olefin-based polymer resin foamed sheet, such as the foam structure, dielectric characteristics, surface qualities, and light reflectance (total reflectance).

Alternatively, the cyclic olefin polymer according to the present invention may be mixed with other resin to provide mechanical properties such as strength and impact values, or functions such as formability and heat resistance, so as to be used as the cyclic olefin resin foamed sheet utilizing a resin mixture or a resin alloy. There are no restrictions on the resin to be mixed and the resin can be selected and adopted according to needs. A mixing ratio of the cyclic olefin polymer according to the present invention and the functional resin is not particularly restricted, and, similarly to the case of additives, the functional resin may be added to an extent not to interfere with properties of the cyclic olefin-based polymer resin foamed sheet, such as the foam structure, dielectric characteristics, surface qualities, and light reflectance (total reflectance), after mixing.

(Average Foam Diameter)

It is specified that an average foam diameter of foams existing in the resin forming the cyclic olefin-based polymer resin foamed sheet of the present invention is 1 - 20 $\mu$m. In the resin foamed sheet of the present invention, the average diameter of foams is small as mentioned above, and thus the relative dielectric constant and the dielectric loss tangent can be kept low, which has an advantage of providing excellent characteristics as an insulation material. Also, the average foam diameter is preferably 1 - 18 $\mu$m, more preferably 1 - 10 $\mu$m or less, further preferably 1 - 8 $\mu$m or less, and furthermore preferably 1 - 6 $\mu$m or less.

(Foam Number Density)

Foam number density (pcs/mm$^3$) in the cyclic olefin-based polymer resin foamed sheet of the present invention is $1.0\times10^5$ - $6.0\times10^8$, and a preferable range of the foam number density is $1.6\times10^5$ - $4.8\times10^8$, more preferably $1.0\times10^6$ - $4.8\times10^8$, and further preferably $6.0\times10^6$ - $4.8\times10^8$. Also, the foam number density is related to the average foam diameter to some extent, and the foam number density tends to decrease in general as the average foam diameter increases. That is, it is preferable that both the small foam diameter and the high foam number density satisfy the predetermined relationship.

(Density and Foaming Ratio)

In the cyclic olefin-based polymer resin foamed sheet of the present invention, density of resin compositions thereof is preferably 0.85 g/cm$^3$ or less. The density is more preferably between 0.125 g/cm$^3$ and 0.80 g/cm$^3$.

Although a preferable foaming ratio for the cyclic olefin polymer resin foamed sheet of the present invention can be deduced from the above density, to be sure, the foaming ratio is preferably 1.2 times or more, or more preferably 1.3 times or more. Although there is no upper limit, the foam ratio may be 10 times or less, or 8 times or less.

(Method for Making Foamed Sheet (Microcellular Foaming Process))

A microcellular foaming process is a batch method, in which, firstly, as a foaming agent for a solid resin sheet, an inert gas (e.g., nitrogen gas or carbon dioxide gas) at high pressure is dissolved sufficiently at room temperature inside a high-pressure vessel until the gas reaches saturation dissolution, and then the gas in the high-pressure vessel is depressurized or heated to induce phase separation by using thermodynamic instability of the gas contained in the resin, resulting in foaming. A specific example of the process is the following three-step method. Firstly, a method for making the resin foamed sheet of the present invention adopts a step for including a non-reactive gas in the resin under pressure (hereinafter, referred to as "a first step"). In the next step, the obtained thermoplastic resin is heated under no pressure within a temperature range between a peak crystalline temperature and a peak melting point temperature of the resin measured by a differential scanning calorimeter (hereinafter, referred to as "a second step") to foam. Finally, a step of cooling the obtained thermoplastic resin is adopted (hereinafter, referred to as "a third step"). The average foam diameter of the foamed sheet can be adjusted by holding time and holding temperature in the second step.

(Specifications on Total Reflectance)

When reflectance of an aluminum oxide reflector in a visible light range at a wavelength of 555 nm is 100%, total reflectance of the cyclic olefin polymer resin foamed sheet of the present invention is preferably 90% or more. It is more preferable that the total reflectance is 94% or more, and furthermore preferably 98% or more. Depending on the intended use, the cyclic olefin-based polymer resin foamed sheet of the present invention can be used by laminating a cyclo-olefin polymer, which is transparent resin, onto another resin.

(Relative Dielectric Constant and Dielectric Loss Tangent)

The low relative dielectric constant and the low dielectric loss tangent enable the foamed sheets to demonstrate suitable performance when being used as housings for electrical/electronic components, electrical insulating materials, sealing materials, protector materials, or substrates for high frequency electromagnetic wave control components. In such viewpoint, the relative dielectric constant of the foamed sheet is preferably 1.10 - 2.00, more preferably 1.10 - 1.50, or particularly preferably 1.10 - 1.35. The dielectric loss tangent (tan $\delta$) is preferably 0.5 - $4.5\times10^{-4}$, more preferably 1.0 - $3.5\times10^{-4}$, particularly preferably 1.0 - $2.5\times10^{-4}$, or furthermore preferably 1.0 - $2.0\times10^{-4}$.

(Arithmetic Mean Surface Roughness)

When an alternating current is applied to a conductor and as the frequency of the current increases, a skin effect, in which the current flows less likely into the center of the conductor but flows only in the surface layer, may occur. Also, a relationship between surface roughness and transmission loss in copper circuits for high frequency is that unevenness of the surface that is larger than a skin depth lengthens a signal transmission path, thereby increasing signal loss, and, in contrast, the unevenness of the surface that is smaller than the skin depth shortens the transmission path, thereby reducing the signal loss. Thus, the smaller the surface roughness of the foamed sheet, the better. Especially in high frequency bands such as a GHz or THz band, surface properties of the foamed sheet influencing surface properties of circuit materials may affect the loss. In addition, for resin foamed sheets that are expected to be used as circuit substrate materials, considering the upcoming further enhancement of circuit accuracy, the surface roughness of the foamed sheet is to be reduced taking the influence of unevenness of the substrate surface on the surface properties of the circuits to be laminated into consideration. Here, since average unevenness of the sheet surface is important as the surface roughness, arithmetic mean surface roughness Ra is used as the surface roughness in the present invention. In such viewpoint, the arithmetic mean surface roughness Ra of the cyclic olefin polymer resin foamed sheet is 0.08 - 0.50 $\mu$m, preferably 0.10 - 0.50 $\mu$m, more preferably 0.10 - 0.35 $\mu$m, furthermore preferably 0.10 - 0.30 $\mu$m, and particularly preferably 0.10 - 0.25 $\mu$m.

A thickness of the cyclic olefin polymer resin foamed sheet of the present invention is 2 - 3 mm at most. The thickness can be determined according to intended use. However, when being applied to housings of electronic components or reflectors, the thickness can be set in a range between 50 $\mu$m and 2 mm, for example, preferably between 100 $\mu$m and 1 mm, and more preferably between 0.5 mm and 1 mm. The cyclic olefin polymer resin foamed sheet of the present invention is made by impregnating foaming gas into the cyclic olefin polymer resin foamed sheet as described separately and then foaming the gas under predetermined conditions, and thus, as mentioned above, the resin foamed sheet having excellent surface quality can be obtained. In addition, roll rolling may be performed as necessary to adjust the

sheet thickness and surface properties, etc. after the microcellular foaming process is completed. The reason why the surface roughness, as the surface quality, of the resin foamed sheet of the present invention is excellent is because the gas penetration process and the foaming process are separated in the present foaming method, thereby reducing the foam diameter and stabilizing the foam diameter distribution. For this reason, the surface properties can be easily stabilized, and, by combining the above-mentioned roll processing, the arithmetic mean surface roughness Ra, which is an index of surface roughness, can be kept low.

(Intended Application)

The cyclic olefin polymer resin foamed sheet of the present invention can be used for, by utilizing its low relative dielectric constant and low dielectric loss tangent, housings for high-quality electrical/electronic components, electrical insulating materials, sealing materials, protector materials, substrates for high frequency electromagnetic wave control components, or light reflectors of lighting device. At this time, the excellent surface properties and light reflectance are advantageous when using the above materials.

A demand for low-dielectric materials is rising increasingly. For example, regarding cell phone services, the fifth generation (5G) mobile communication system started to be introduced overseas in 2019 and in Japan in 2020, and new systems with high speed, large capacity, low latency, and simultaneous multiple connections have begun. Regarding automobiles, development of advanced driver-assistance systems (ADAS) has progressed and practical uses of new technologies have been in progress, with level 3 self-driving cars now on the market, for example. Those supporting such technology are printed circuit boards and antenna substrates for high frequencies such as the Sub-6 band or millimeter wave band. Since the transmission loss of electromagnetic waves increases as the frequency increases, a role of the low-dielectric substrate in suppressing the loss is becoming increasingly important. Also, as mentioned at the beginning, there is a demand for terahertz wave compatibility, for which the cyclic olefin polymer resin foamed sheet of the present invention can also be used suitably.

The cyclic olefin polymer resin foamed sheet of the present invention has extremely high total reflectance. Applications thereof include a light reflector for a lighting device as mentioned above. Increasing awareness of energy conservation has led to a shift to LED use in general lighting device in houses, offices, and stores. Also, for interiors of automobiles, improvement in lighting and illumination efficiency due to downsizing, reduced cost of LED light sources, advantages such as design freedom of room lamps and illuminations have led to provide pleasant interior spaces, thereby improving product values. The cyclic olefin polymer resin foamed sheet of the present invention can meet the above needs because of the extremely high total reflectance. Also, with an excellent formability, it is possible to provide the reflector that can be processed into shapes that meet the restrictions of the lighting form or installation location.

WORKING EXAMPLE

(Materials Used)

Cyclic Olefin Polymers

(1) ZEONEX C2420 by Zeon Corporation (DCP syndiotactic resin as estimated from its melting point)
(2) ZEONEX 790R by Zeon Corporation (norbornene-based resin)
(3) ZEONOR 1420R by Zeon Corporation (norbornene-based resin)
(4) ZEONEX K22R by Zeon Corporation (norbornene-based resin) Glass transition temperature (JISK7121): 143°C
(5) ZEONEX T62R by Zeon Corporation (norbornene-based resin) Glass transition temperature (JISK7121): 154°C
(6) Cycloolefin copolymer (COC) elastomer:

TOPAS E-140 by POLYPLASTICS CO., LTD.
Amorphous resin produced by TOPAS Advanced Polymers GmbH (norbornene-based resin)
An elastomer that has tensile modulus of 50 MPa, tensile elongation at break of more than 500% (ISO 527-T2/1A) and maintains excellent ductility even in the sub-zero temperature range.

(7) Cycloolefin copolymer (COC):
TOPAS 5013L-10 by POLYPLASTICS CO., LTD. (norbornene-based resin)
(8) Cycloolefin copolymer (COC):
TOPAS 6015 by POLYPLASTICS CO., LTD. (norbornene-based resin)

(Manufacturing Working Example Materials as Test Pieces)

A rolled body of each of the above-mentioned cyclic olefin polymer sheets was obtained. The rolled body was then placed inside a pressure vessel and pressurized with carbon dioxide gas to 5.2 MPa inside the pressure vessel for the carbon dioxide gas to be permeated into the resin film for 24 hours. After such process, the rolled body was removed from the pressure vessel and fed continuously into a hot-air circulating foaming furnace set at a temperature between 140°C and 260°C to be held for a predetermined time to foam. In this way, the cyclic olefin polymer sheet was foamed and a cyclic olefin polymer resin foamed sheet was obtained. For Comparison Example materials, the carbon dioxide gas was not permeated and non-foamed resin sheets were used. Here, holding temperatures for foaming of the test materials were: 260°C for Working Example materials 1- 4, 170°C for Working Example materials 5 - 8, and 140°C for Working Example materials 9 and 10.

(Measurement Method)

The foaming ratio and foam density are measured as follows.

(Method for Measuring Foaming Ratio)

The foaming ratio is an apparent ratio commonly used for resin-foamed bodies. The apparent ratio can be calculated by cutting out a test piece of 10 cm × 10 cm in size from the resin foamed sheet, measuring the weight (W1 [g]) of the test piece, and then measuring the thickness (the measuring equipment is in accordance with JISK6767) at the four corners and at the center of the test piece to find an average value (T [cm]) of the five points, and by using formula (1) below.

$$\text{Apparent Ratio (Foaming Ratio)} = 10 \times 10 \times T / W1 \qquad (1)$$

(Method for Measuring Foam Density)

The method for measuring density of the resin foamed sheet is performed by using a method according to JIS K7222-1999, "Foamed plastics and rubbers - a method for measuring apparent density". The test piece is cut out into 10 cm × 10 cm in size from the resin foamed sheet that has been left for condition adjustment at a temperature of 23°C±2°C for at least 72 hours after molding.
Specifically, the foam density is calculated by the following formula (2). The unit for the foam density is g/cm$^3$.
[Equation 1]

$$\rho_a = \{(m + ma)\} / V \qquad (2)$$

wherein, m represents a mass (g) of the test piece, V represents a volume (cm$^3$) of the test piece, and ma represents a mass (g) of displaced air.
The density is calculated ignoring ma (the mass of displaced air), which can be ignored due to its low foaming ratio. Measurements are taken five times, and average value of the measurement results of all the test pieces is calculated as the density.

(Method for Measuring Foam Diameter)

The foam diameters are found according to ASTMD 3576-77. An SEM photograph of a longitudinal cross section of the sheet is taken, straight lines are drawn on the SEM photograph horizontally and vertically, and chord lengths t of the foams crossed by the straight lines are averaged. Magnification of the photograph is to be M, which is assigned into the following formula to find the average foam diameter d (d = t / (0.616 × M)). The average foam diameter is determined by taking measurements of the SEM photographs of three different views of the center of the width direction and averaging the measurements.

(Method for Measuring Foam Number Density)

An SEM photograph of a longitudinal cross section of the cyclic olefin polymer resin foamed sheet is taken, and five regions of 100 μm × 100 μm are randomly selected on the SEM photograph and the number of foams existing in each region is counted. From each count value, the number of foams per 1 mm$^2$ based on each region is calculated, which determines the number of foams per 1 mm$^3$ based on each region. An average number of foams per 1 mm$^2$ based on each

of the five regions is calculated to find the foam density (pcs/$mm^2$).

The obtained number of foams per 1 $mm^2$ is raised to the power of (3/2) to find the number of foams per 1 $mm^3$ based on each region. An average number of foams per 1 $mm^3$ based on each of the five regions is calculated to find the foam density (pcs/$mm^3$).

When measuring the foam diameter or the foam number density, it is preferable to prepare a plurality of SEM photographs (preferably, three or more) and take the average of the values calculated from each SEM photograph.

(Measurement of Total Reflectance of Light)

Total reflectance of light beams is measured as follows. The total reflectance of a sample at a wavelength of 550 nm is measured by using Spectrophotometer U-4100 (a product name) by Hitachi High-Tech Corporation. A white aluminum oxide plate (210-0740 (a product name) by Hitachi High-Tech Fielding Corporation) is used as a reference, and a relative value to the reference is to be the measurement value.

(Measurement of Relative Dielectric Constant and Dielectric Loss Tangent)

The relative dielectric constant and dielectric loss tangent are measured by using a cavity resonator perturbation method with a measurement frequency set at 2GHz. As the relative dielectric constant $\varepsilon_r$ and dielectric loss tangent tan$\delta$, a complex relative dielectric constant in a planar direction of the cyclic olefin polymer foamed resin sheet can be measured by the cavity resonator method. In the present invention, the relative dielectric constant is measured by the cavity resonator method at a resonant frequency of 2GHz using a sample of 78mm long $\times$ 2.4 mm wide $\times$ 1mm thick. For equipment to be used for the measurement, for example, CP461 by Kanto Electronics Application & Development Inc. can be used as a cavity resonator, and E8361A by Agilent Technologies, Inc., can be used as a network analyzer.

(Measurement of Surface Roughness)

To evaluate overall surface properties of the foamed sheet, surface properties of the foamed sheet of the present invention are evaluated by measuring Ra instead of Rz, which is largely affected by maximum unevenness.

Arithmetic mean roughness of Ra is determined in accordance with JISB0601: 2013. For the measurement, Handysurf E-30A (by TOKYO SEIMITSU CO., LTD.) is used. In each measurement, a reference length is to be 2.5 mm. If the surface roughness Ra is 1.0 $\mu$m or less in the present invention, for example, this means that, on the foamed sheet surface, five measurement lines are randomly determined in an MD direction and the arithmetic mean roughness of the measurement value on each measurement line is measured to find an average roughness of the obtained five measurement values, and five measurement lines are randomly determined in a TD direction and the arithmetic mean roughness of the measurement value on each measurement line is measured, and an averaged value of the average roughness of the obtained five measurement values in both directions is 1.0 $\mu$m or less. That is, the surface roughness in the present invention is evaluated as the average in both MD and TD directions.

The reason why the average in both directions is used here by adding influence of the surface roughness as the surface properties not only in the MD direction but also in the TD direction is that the material is sometimes passed through rolls at the time of manufacturing the sheet material and, at this time, the surface of the sheet receives pressure effects from the rolls in the MD direction as well as tension to be stretched, and thus the surface properties excel in the MD direction than in the TD direction in many cases.

(Materials used for Testing)

Materials used for testing are the following Working Example materials 1 - 10 and Comparison Example materials 1 and 2, which are twelve types of COP resin in total. Comparison Example materials 1 and 2 are non-foamed sheets having the same compositions as the predetermined materials of Working Example materials.

Working Example material 1 is a foamed sheet using ZEONEX C2420 alone as COP resin, and Working Example materials 2 - 4 are foamed sheets using ZEONEX C2420 as a main COP resin component to which a predetermined amount of TOPAS E140, which is a COC elastomer, is added incrementally. Here, Working Example material 2 is a foamed sheet including 95 mass% of ZEONEX C2420 added with 5 mass% of the COC elastomer TOPAS E140, Working Example material 3 is a foamed sheet including 90 mass% of ZEONEX C2420 added with 10 mass% of the COC elastomer TOPAS E140, Working Example material 4 is a foamed sheet including 80 mass% of ZEONEX C2420 added with 20 mass% of the COC elastomer TOPAS E140.

Also, Working Example materials 5 - 8 here are foamed bodies in which types of COP resin are varied. Specifically, Working Example material 5 is a foamed body using ZEONOR 790R as COP resin, and Working Example material 6 is a foamed body using ZEONOR 1430R as COP resin. Working Example material 7 is a foamed sheet using

ZEONEX K22R, and Working Example material 8 is a foamed sheet using ZEONEX T62R.

Working Example material 9 is a COC resin foamed sheet using TOPAS 5013L-10 as COC resin, and Working Example material 10 is a COC resin foamed sheet using TOPAS 6015 alone as COC resin.

Comparison Example material 1 is to show the relative dielectric constant and the dielectric loss tangent of ZEONEX C2420 as non-foamed COP resin, and Comparison Example material 2 is a non-foamed sheet material with a composition of 80 mass% of COP resin mixed with 20 mass% of the COC elastomer.

The composition of Comparison Example material 1 is identical to the composition of Working Example material 1, and the composition of Comparison Example material 2 is identical to the composition of Working Example material 4.

(Results of Evaluation Test on Properties of Test Material Foamed Sheets)

Table 1 shows the results of property evaluation on Working Example materials 1- 10 and Comparison Example materials 1 and 2 used for the test.

[Table 1]

| Test Material No. | Component A: COP resin | Compounding Amount (mass%) | Component B: COC resin | Compounding Amount (mass%) | Foaming Process | Average Foam Diameter (μm) | Foam Number Density (pcs/$mm^3$) | Foaming Ratio (-) | Density g/$cm^3$ | Total Reflectance 550nm | Relative Dielectric Constant | Dielectric Loss Tangent | Surface Roughness (Ra:μm) |
|---|---|---|---|---|---|---|---|---|---|---|---|---|---|
| Working Example Material 1 | Zeon Corporation ZEONEX C2420 | 100 | | | ○ | 2.7 | $3.9\times10^7$ | 3.5 | 0.29 | 99.8 | 1.32 | $2.0\times10^{-4}$ | 0.10 |
| Working Example Material 2 | Zeon Corporation ZEONEX C2420 | 95 | POLYPLASTICS CO., LTD. TOPAS E-140* | 5 | ○ | 3.8 | $1.4\times10^7$ | 6.3 | 0.16 | 99.4 | 1.11 | $1.0\times10^{-4}$ | 0.16 |
| Working Example Material 3 | Zeon Corporation ZEONEX C2420 | 90 | POLYPLASTICS CO., LTD. TOPAS E-140* | 10 | ○ | 3.2 | $2.3\times10^7$ | 5.6 | 0.18 | 99.2 | 1.20 | $1.0\times10^{-4}$ | 0.25 |
| Working Example Material 4 | Zeon Corporation ZEONEX C2420 | 80 | POLYPLASTICS CO., LTD. TOPAS E-140* | 20 | ○ | 16.0 | $1.6\times10^5$ | 6.7 | 0.15 | 98.5 | 1.11 | $1.0\times10^{-4}$ | 0.50 |
| Working Example Material 5 | Zeon Corporation ZEONOR 790R | 100 | | | ○ | 1.2 | $4.8\times10^8$ | 11.7 | 0.20 | 99.5 | 1.21 | $1.2\times10^{-4}$ | 0.23 |
| Working Example Material 6 | Zeon Corporation ZEONOR 1430R | 100 | | | ○ | 1.3 | $3.6\times10^8$ | 7.8 | 0.30 | 99.2 | 1.32 | $1.4\times10^{-4}$ | 0.15 |
| Working Example Material 7 | Zeon Corporation ZEONEX K22R | 100 | | | ○ | 1.3 | $4.0\times10^8$ | 11.7 | 0.20 | 99.3 | 1.22 | $1.2\times10^{-4}$ | 0.21 |

(continued)

| Test Material No. | Component A: COP resin | Compounding Amount (mass%) | Component B: COC resin | Compounding Amount (mass%) | Foaming Process | Average Foam Diameter (μm) | Foam Number Density (pcs/mm$^3$) | Foaming Ratio (-) | Density g/cm$^3$ | Total Reflectance 550nm | Relative Dielectric Constant | Dielectric Loss Tangent | Surface Roughness (Ra:μm) |
|---|---|---|---|---|---|---|---|---|---|---|---|---|---|
| Working Example Material 8 | Zeon Corporation ZEONEX T62R | 100 | | | ○ | 1.4 | $3.0\times10^8$ | 9.0 | 0.26 | 99.0 | 1.28 | $1.2\times10^{-4}$ | 0.15 |
| Working Example Material 9 | | | POLYPLASTICS CO., LTD. TOPAS 5013L-10 | 100 | ○ | 4.8 | $6.0\times10^6$ | 3.3 | 0.72 | 94.4 | 1.77 | $2.2\times10^{-4}$ | 0.12 |
| Working Example Material 10 | | | POLYPLASTICS CO., LTD. TOPAS6015 | 100 | ○ | 1.2 | $4.8\times10^8$ | 3.7 | 0.64 | 98.6 | 1.68 | $2.1\times10^{-4}$ | 0.13 |
| Comparison Example Material 1 | Zeon Corporation ZEONEX C2420 | 100 | | | | | | 1 | 1.01 | - | 2.34 | $5.0\times10^{-4}$ | 0.29 |
| Comparison Example Material 2 | Zeon Corporation ZEONEX C2420 | 80 | POLYPLASTICS CO., LTD. TOPAS E-140* | 20 | | | | 1 | 1 | - | 2.13 | $2.8\times10^{-4}$ | 0.24 |

*TOPAS E-140 in the table is a COC elastomer

(Foaming Ratio and Density of COP-based resin Foamed Sheet)

When foaming properties of Working Example materials are evaluated in terms of foaming ratio and density, the foaming ratios of Working Example materials 1 - 10 are within a range between 1.4 and 6.7 times, which are low foaming ratios of ten times or less. In particular, except for Working Example materials 2 and 4 in which the maximum foam diameter of 16.0 μm can be obtained, the foaming ratios of other Working Example materials are less than 6 times. Meanwhile, the foaming ratios for Working Example materials 9 and 10, which are foamed sheets using only COC resin, are low and less than 2 times.

In contrast, the foam density of Working Example materials 1 - 10 is in a range of 0.15 - 0.72 g/cm$^3$, and since the foaming ratios are ten times or less, there is no foamed body with the foam density of 0.1 or less. The density of the foamed sheet of Working Example material 4, in which the maximum foam diameter of 16.0 μm can be obtained, is the lowest at 0.15 g/cm$^3$, while Working Example materials 9 and 10 show the foam density as high as 0.72 and 0.64 g/cm$^3$, respectively, due to the low foaming ratios of 1.4 times and 1.6 times, respectively.

(Properties in relation to Foam Structure of COP-based resin Foamed Sheet)

When Working Example materials 1 - 10 are foamed, there is no foaming inhibition in any of the test materials and foaming can be carried out without any particular issues, and predetermined foamed sheets are obtained. Foam structures in the present invention can be adjusted accordingly by changing the material composition forming the foamed bodies and foaming conditions. Here, looking at the average foam diameter and the average foam number density and the foam density of the foamed sheets in the present invention, for the entire Working Example materials, the average foam diameter in a range of 1.2 μm - 16.0 μm, the foam number density in a range of $1.6\times10^5$ - $4.8\times10^8$ pcs/m$^3$, and the foam density in a range of 0.15 - 0.72 are obtained.

When looking at the results of the foamed sheets of Working Example materials 1 - 4, in which ZEONEX C2420 as a main COP resin component to which a predetermined amount of TOPAS E140, which is a COC elastomer, is added incrementally, adding the more COC elastomer so as to grow foams by foaming can increase the average foam diameter, thereby, as a result, reducing the foam number density and the foam density.

In contrast, in the case of using Working Example materials 5 - 8 in which only COP resin that is different from ZEONEX C2420 is used without including the COC elastomer, the average foam diameter is smaller than that in Working Example materials 2 - 4, in which COP resin is added with the predetermined amount of the COC elastomer, thereby increasing the foam number density. This may be because, in the case of COP resin added with the COC elastomer, for example, adding the COC elastomer has improvement effect on viscoelastic properties, such as improvement on melt tension around foaming temperature.

Also, in the case of Working Example material 9 and Working Example material 10 of the foamed sheets using only COC resin, differences in foaming properties such as foam structures are recognized depending on types of COC resin.

Also, for the foam structures in the present invention, it is needless to say that, in addition to the foam structures disclosed in Working Examples, foam structures that are different from but similar to the ones disclosed in Working Examples can be obtained by appropriately changing the composition of the material forming the foamed bodies and the foaming conditions.

(Measurement Results of Total Reflectance of COP-based resin Foamed Sheet)

Ratios to the total reflectance of the standard aluminum oxide plate at a wavelength of 550 nm in the visible light band of Working Example materials 1 - 10 are all 90% or more, and by introducing foams of the average foam diameter of 20 μm or less, more specifically between 1.2 and 16.0 μm, resin foamed sheets with high reflectance can be obtained. Also, although data for diffuse reflectance is not particularly measured, the diffusion reflectance for the resin foamed sheets in the present invention is estimated to be high since micro foams are introduced.

While the ratios to the total reflectance of the standard aluminum oxide plate of the resin foamed sheets of Working Example materials 1 to 8 formed of COP resin alone or of COP resin added with 5 mass % to 20 mass% of COC resin are 98.5 - 99.8%, the total reflectance of Working Example material 9 and Working Example material 10 with the 100% COC resin composition is 94.4% and 98.6%, respectively, which is slightly inferior to those of the above-mentioned Working Example materials 1 - 8. This difference may be due to difference in resin composition of the foamed bodies.

(Measurement Results of Relative Dielectric Constant and Dielectric Loss Tangent of COP resin Foamed Sheet)

For Working Example materials 1 - 10, the relative dielectric constant is shown to be in a range between 1.11 and 1.77 and the dielectric loss tangent is shown to be in a range between $1.0\times10^{-4}$ and $2.2\times10^{-4}$. Also, when looking at

measurement results of dielectric characteristics of foamed sheets of Working Example materials 1 - 4 including ZEONEX C2420 as a main COP resin component to which the predetermined amount of TOPAS E140, which is a COC elastomer, is added incrementally in steps in a range between 0 pts.mass and 20 pts.mass, the relative dielectric constant is in a range between 1.11 and 1.32 and the dielectric loss tangent is in a range between $1.0\times10^{-4}$ and $2.0\times10^{-4}$.

The relative dielectric constant and the dielectric loss tangent of the materials added with the predetermined amount of the COC elastomer are low. It may be considered that those with the larger average foam diameter and foams with the predetermined foam number density obtained by increasing the COC elastomer have slightly better dielectric characteristics.

In contrast, in Working Example materials 5 - 8 where types of COP resin are changed, the relative dielectric constant is in a range between 1.21 and 1.32 and the dielectric loss tangent is in a range between $1.2\times10^{-4}$ and $1.4\times10^{-4}$, which are approximately similar to the resin foamed sheets similarly using only COP resin C2420 as a base material. Meanwhile, in Working Example materials 9 and 10 with 100% COC resin, the relative dielectric constant and the dielectric loss tangent are larger compared to those for Working Example materials 1 - 8: the relative dielectric constant is 1.77 and the dielectric loss tangent is $2.2\times10^{-4}$ in Working Example material 9 and the relative dielectric constant is 1.68 and the dielectric loss tangent is $2.1\times10^{-4}$ in Working Example material 10.

Here, a reason why the dielectric characteristics of Working Example materials 9 and 10 are inferior to those of the other Working Example materials may be due to difference in structures between COP resin and COC resin. Also, for the non-foamed sheets having the same compositions as Working Example materials 1 and 4 have the relative dielectric constant of 2.34 and 2.13, respectively, which are 2.00 or more, and the dielectric loss tangent of $5.0\times10^{-4}$ and $2.8\times10^{-4}$, which are more than $2.5\times10^{-4}$.

(Measurement Results of Arithmetic Mean Surface Roughness Ra of COP-based resin Foamed Sheet)

The arithmetic mean surface roughness Ra of Working Example materials 1 - 10 is in a range between 0.10 and 0.50 μm. Here, looking more closely into differences between the materials, for the foamed sheets of Working Example materials 1 - 4 with varied content amounts of the COC elastomer TOPAS E-140 added to COP ZEONEX C2420 to change the foam ratios and foam diameters, the average foam diameter is 16.0 μm, which is larger than 10 μm, and the surface roughness is as large as 0.50 μm for Working Example material 4. However, there is not much difference in the average foam diameter for Working Example materials 1 - 3, although differences are observed between the materials with the average foam diameter between 2.7 and 3.8 μm. This may be because the average foam diameter is as large as 16. 0 μm in the case of Working Example material 4 and a change in the foam structure inside the foamed body due to foam growth during the foaming process may have affected the surface roughness of the surface of the foamed sheet.

On the other hand, for Working Example materials 5 - 8 in which types of COP resin by Zeon Corporation are changed, and for Working Example materials 9 - 10 in which COC resin by POLYPLASTICS CO., LTD. is used, although differences between the materials are observed, the surface roughness of the former ranges between 0.15 μm and 0.23 μm, and the surface roughness of the latter ranges between 0.12 μm and 0.13 μm. Even when evaluating over the entirety of Working Example materials 5 - 10, the surface roughness ranges between 0.12 μm and 0.23 μm, and the surface roughness of Working Example materials 1 - 10 except Working Example material 4 satisfies 0.30 μm or less, or even 0.25 μm or less, and the difference in the surface roughness between the materials is not so large. This may be because the average foam diameter of the foamed sheets is as small as 5 μm or less and the effect of foam growth on the surface roughness of the foam surface is small, and the effect of increasing the surface roughness of the foam surface by the foam growth is added with effect of improving the surface roughness by stretching effect when the resin is softened at the time of foaming. Also, for the non-foamed sheets in Comparison Example materials 1 and 2, the surface roughness exceeds 0.20 μm in both cases.

(Summary of Test Results)

From the results of Working Examples, the foamed sheets using cyclic olefin-based polymers following regulation of the present invention (Working Example materials 1 - 10) all have excellent light reflection characteristics and dielectric characteristics (low relative dielectric constant, low dielectric loss tangent), and good surface qualities.

In particular, Working Example materials 2 - 4 using, as a cyclic olefin-based polymer, a mixture of the cyclic olefin polymer (COP) added with the cyclic olefin copolymer (COC) in a range of 20 mass%, or Working Example materials 5 - 8 in which the type of cyclic olefin polymers is changed, and even Working Example materials 9 and 10 including COC alone have achieved the results, in which the results showing more excellent light reflection characteristics, dielectric characteristics (low relative dielectric constant, low dielectric loss tangent), and surface qualities are obtained. In contrast, cyclic olefin polymers in Comparison Example materials are not foamed, and the relative dielectric constant thereof shown is at least approximately 0.4 higher than that of Working Example materials. The dielectric loss tangent is also high: the dielectric loss tangent of Comparison Example 1 is $5.0\times10^{-4}$, showing an extremely high value, while the dielectric loss

tangent of Working Example ranges between $1.0\times10^{-4}$ and $2.2\times10^{-4}$.

## Claims

1. A cyclic olefin-based polymer resin foamed sheet comprising:

any of a simple substance of a cyclic olefin homo-polymer (A), a simple substance of a cyclic olefin copolymer (B), or a mixture of the cyclic olefin homo-polymer (A) and the cyclic olefin copolymer (B), wherein an average foam diameter of the cyclic olefin-based polymer resin foamed sheet is 1-20 μm.

2. The cyclic olefin-based polymer resin foamed sheet according to claim 1, wherein

the cyclic olefin copolymer (B) is a cyclic olefin elastomer; and
1 - 20 pts.mass of the cyclic olefin elastomer is added to 100 pts.mass of the cyclic olefin homo-polymer (A).

3. The cyclic olefin-based polymer resin foamed sheet according to claim 1, wherein

the cyclic olefin homo-polymer (A) or the cyclic olefin copolymer (B) includes repeated units represented by any of the following formulas: (a3), (b3), (c2), (d1), (e3), and (f3);

[CHEMICAL FORMULA 1]

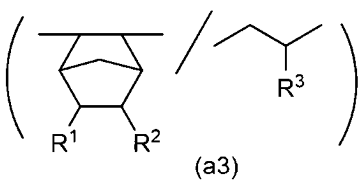

(a3)

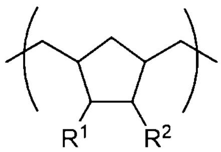

(b3)

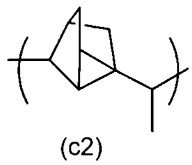

(c2)

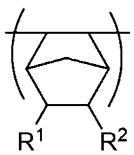

(d1)

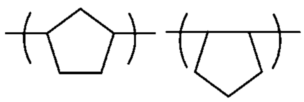

(e3)

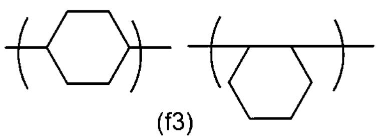

(f3)

wherein, $R^1$ and $R^2$ are, independently and respectively, a hydrogen atom, an alkyl group of 1 - 10 carbon atoms, an alkenyl group of 2 - 10 carbon atoms, an alkynyl group of 2 - 10 carbon atoms, an aryl group of 6 - 18 carbon atoms, a hydroxyl group, a halogen atom, or a carboxyl group, and $R^1$ and $R^2$ may be bound together to form a ring; and
$R^3$ is a hydrogen atom, an alkyl group of 1 - 10 carbon atoms, an alkenyl group of 2 - 10 carbon atoms, an alkynyl group of 2 - 10 carbon atoms, an aryl group of 6 - 18 carbon atoms, a hydroxyl group, a halogen atom, a carboxyl group, an acyl group of 2 - 12 carbon atoms, or an alkyloxycarbonyl group of 2 - 12 carbon atoms.

4. The cyclic olefin-based resin foamed sheet according to claim 3, wherein the cyclic olefin homo-polymer (A) or the cyclic olefin copolymer (B) includes repeated units represented by any of the following formulas: (b3-1) - (b3-7).

[CHEMICAL FORMULA 2]

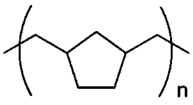
(b3-1)
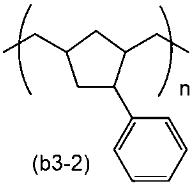
(b3-2)
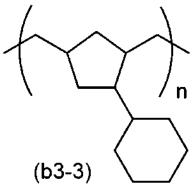
(b3-3)
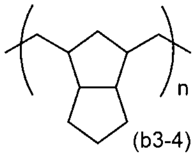
(b3-4)
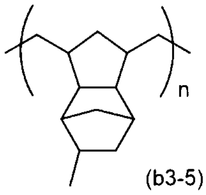
(b3-5)
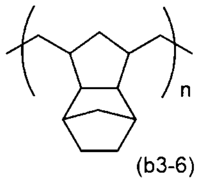
(b3-6)
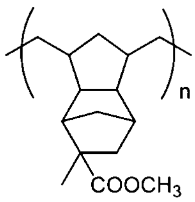
(b3-7)

**5.** The cyclic olefin-based polymer resin foamed sheet according to any one of claims 1 to 4, wherein the cyclic olefin polymer (A) is a crystalline olefin polymer.

**6.** The cyclic olefin-based polymer resin foamed sheet according to any one of claims 1 to 4, wherein the cyclic olefin-based polymer resin foamed sheet has a relative dielectric constant of 1.10 - 2.00 and a dielectric loss tangent satisfying a range between $0.5\times10^{-4}$ and $4.5\times10^{-4}$, the relative dielectric constant and the dielectric loss tangent being measured at a measuring frequency of 2 GHz by using a cavity resonator perturbation method.

**7.** The cyclic olefin-based polymer resin foamed sheet according to any one of claims 1 to 4, wherein total reflectance of the cyclic olefin-based polymer resin foamed sheet is 90% or more when reflectance of an aluminum oxide reflector in a visible light range at a wavelength of 550 nm is 100%.

**8.** The cyclic olefin-based polymer resin foamed sheet according to any one of claims 1 to 4, wherein the cyclic olefin-based polymer resin foamed sheet satisfies that an average of arithmetic mean surface roughness Ra in a MD direction and the arithmetic mean surface roughness Ra in a TD direction of the cyclic olefin-based polymer resin foamed sheet is 0.50 μm or less.

**9.** The cyclic olefin-based polymer resin foamed sheet according to claim 6, wherein the cyclic olefin-based polymer resin foamed sheet is applied to housings for electrical/electronic components, electrical insulating materials, sealing materials, protector materials, high frequency substrates, or substrates for electromagnetic wave control components.

**10.** The cyclic olefin polymer resin foamed sheet according to claim 7, wherein the cyclic olefin polymer resin foamed sheet is applied to a light reflector of a lighting device.

**11.** Use of the cyclic olefin-based polymer resin foamed sheet according to claim 6, wherein the use is for housings for electrical/electronic components, electrical insulating materials, sealing materials, protector materials, high frequency substrates, or substrates for electromagnetic wave control components.

**12.** Use of the cyclic olefin-based polymer resin foamed sheet according to claim 7, wherein the use is for a light reflector of a lighting device.

**Amended claims under Art. 19.1 PCT**

**1.** (Amended) A cyclic olefin-based polymer resin foamed sheet comprising:

any of a simple substance of a cyclic olefin homo-polymer (A), a simple substance of a cyclic olefin copolymer (B), or a mixture of the cyclic olefin homo-polymer (A) and the cyclic olefin copolymer (B), wherein
an average foam diameter of the cyclic olefin-based polymer resin foamed sheet is 1-20 μm;
total reflectance of the cyclic olefin-based polymer resin foamed sheet is 90% or more when reflectance of an aluminum oxide reflector in a visible light range at a wavelength of 550 nm is 100%.

**2.** The cyclic olefin-based polymer resin foamed sheet according to claim 1, wherein

the cyclic olefin copolymer (B) is a cyclic olefin elastomer; and
1 - 20 pts.mass of the cyclic olefin elastomer is added to 100 pts.mass of the cyclic olefin homo-polymer (A).

**3.** The cyclic olefin-based polymer resin foamed sheet according to claim 1, wherein

the cyclic olefin homo-polymer (A) or the cyclic olefin copolymer (B) includes repeated units represented by any of the following formulas: (a3), (b3), (c2), (d1), (e3), and (f3);

[CHEMICAL FORMULA 1]

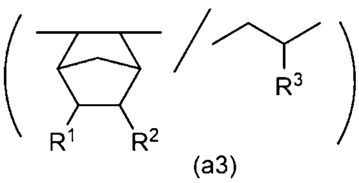
(a3)
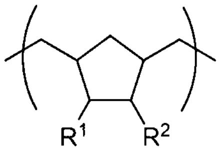
(b3)
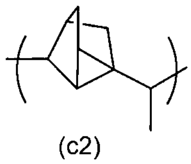
(c2)
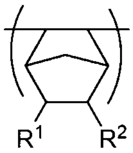
(d1)
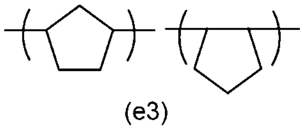
(e3)
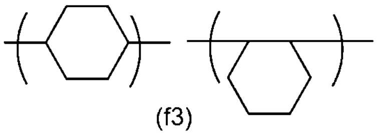
(f3)

wherein, $R^1$ and $R^2$ are, independently and respectively, a hydrogen atom, an alkyl group of 1 - 10 carbon atoms, an alkenyl group of 2 - 10 carbon atoms, an alkynyl group of 2 - 10 carbon atoms, an aryl group of 6 - 18 carbon atoms, a hydroxyl group, a halogen atom, or a carboxyl group, and $R^1$ and $R^2$ may be bound together to form a ring; and
$R^3$ is a hydrogen atom, an alkyl group of 1 - 10 carbon atoms, an alkenyl group of 2 - 10 carbon atoms, an alkynyl group of 2 - 10 carbon atoms, an aryl group of 6 - 18 carbon atoms, a hydroxyl group, a halogen atom, a carboxyl group, an acyl group of 2 - 12 carbon atoms, or an alkyloxycarbonyl group of 2 - 12 carbon atoms.

**4.** The cyclic olefin-based resin foamed sheet according to claim 3, wherein
the cyclic olefin homo-polymer (A) or the cyclic olefin copolymer (B) includes repeated units represented by any of the following formulas: (b3-1) - (b3-7).

[CHEMICAL FORMULA 2]

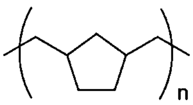
(b3-1)
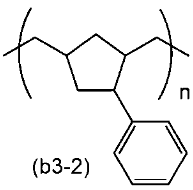
(b3-2)
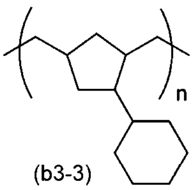
(b3-3)
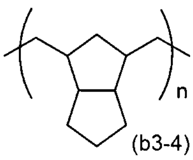
(b3-4)
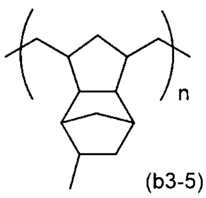
(b3-5)
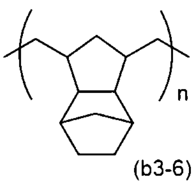
(b3-6)
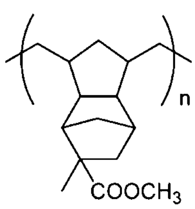
(b3-7)

**5.** The cyclic olefin-based polymer resin foamed sheet according to any one of claims 1 to 4, wherein
the cyclic olefin polymer (A) is a crystalline olefin polymer.

**6.** The cyclic olefin-based polymer resin foamed sheet according to any one of claims 1 to 4, wherein
the cyclic olefin-based polymer resin foamed sheet has a relative dielectric constant of 1.10 - 2.00 and a dielectric loss tangent satisfying a range between $0.5\times10^{-4}$ and $4.5\times10^{-4}$, the relative dielectric constant and the dielectric loss

tangent being measured at a measuring frequency of 2 GHz by using a cavity resonator perturbation method.

**7.** (Deleted)

**8.** The cyclic olefin-based polymer resin foamed sheet according to any one of claims 1 to 4, wherein
the cyclic olefin-based polymer resin foamed sheet satisfies that an average of arithmetic mean surface roughness Ra in a MD direction and the arithmetic mean surface roughness Ra in a TD direction of the cyclic olefin-based polymer resin foamed sheet is 0.50 μm or less.

**9.** (Amended) The cyclic olefin-based polymer resin foamed sheet according to claim 6, wherein
the cyclic olefin-based polymer resin foamed sheet is applied to any of a light reflector of a lighting device, housings for electrical/electronic components, electrical insulating materials, sealing materials, protector materials, high frequency substrates, or substrates for electromagnetic wave control components.

**10.** (Deleted)

**11.** (Amended) Use of the cyclic olefin-based polymer resin foamed sheet according to claim 6, wherein
the use is for any of a light reflector of a lighting device, housings for electrical/electronic components, electrical insulating materials, sealing materials, protector materials, high frequency substrates, or substrates for electromagnetic wave control components.

**12.** (Deleted)

**INTERNATIONAL SEARCH REPORT**

International application No.
**PCT/JP2024/001658**

**A. CLASSIFICATION OF SUBJECT MATTER**

***C08J 9/04***(2006.01)i; ***C08L 45/00***(2006.01)i
FI: C08J9/04 101; C08L45/00; C08J9/04 CER

According to International Patent Classification (IPC) or to both national classification and IPC

**B. FIELDS SEARCHED**

Minimum documentation searched (classification system followed by classification symbols)

C08J9/00-9/42; B29C44/00-44/60; B29C67/20; C08L45/00; B29K45/00; C08F32/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2004-051670 A (MITSUI CHEMICALS, INC.) 19 February 2004 (2004-02-19) entire document, in particular, claims, paragraphs [0012]-[0022], [0084]-[0094], [0157], [0162]-[0186] | 1 |
| X | US 2020/0354537 A1 (EXXONMOBIL CHEMICAL PATENTS INC.) 12 November 2020 (2020-11-12) entire document, in particular, claims, paragraphs [0009]-[0012], [0045]-[0057], [0071]-[0100] | 1, 3 |
| Y | JP 9-100363 A (MATSUSHITA ELECTRIC INDUSTRIAL CO., LTD.) 15 April 1997 (1997-04-15) entire document, in particular, claims, paragraphs [0032], [0033] | 1, 3, 4, 6, 9, 11 |
| Y | 渡辺充広. シクロオレフィンポリマーへの平滑回路形成. エレクトロニクス実装学会誌. 31 May 2007, vol. 10, no. 3, pp. 229-233, (WATANABE, Mitsuhiro. Smooth Circuit Formation on Cycloolefin Polymers. Journal of The Japan Institute of Electronics Packaging.) entire document, in particular, 1. Introduction | 1, 3, 4, 6, 9, 11 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 March 2024** | **02 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
PCT/JP2024/001658

C. DOCUMENTS CONSIDERED TO BE RELEVANT

| Category* | Citation of document, with indication, where appropriate, of the relevant passages | Relevant to claim No. |
|---|---|---|
| Y | JP 2013-213198 A (NITTO DENKO CORPORATION) 17 October 2013 (2013-10-17) entire document, in particular, claims, paragraphs [0021], [0054], [0071]-[0080] | 1, 3, 4, 6, 9, 11 |
| Y | JP 2012-182116 A (NITTO DENKO CORPORATION) 20 September 2012 (2012-09-20) entire document, in particular, claims, paragraphs [0020], [0070], [0095]-[0109] | 1, 3, 4, 6, 9, 11 |
| A | JP 11-514680 A (TICONA GMBH) 14 December 1999 (1999-12-14) entire document | 1-12 |
| A | WO 01/68728 A1 (TORAY INDUSTRIES, INC.) 20 September 2001 (2001-09-20) entire document | 1-12 |
| A | JP 2002-201216 A (TORAY INDUSTRIES, INC.) 19 July 2002 (2002-07-19) entire document | 1-12 |
| A | JP 2003-096229 A (MITSUI CHEMICALS, INC.) 03 April 2003 (2003-04-03) entire document | 1-12 |
| A | WO 2006/068009 A1 (THE FURUKAWA ELECTRIC CO., LTD.) 29 June 2006 (2006-06-29) entire document | 1-12 |
| A | WO 2013/094461 A1 (THE FURUKAWA ELECTRIC CO., LTD.) 27 June 2013 (2013-06-27) entire document | 1-12 |

Form PCT/ISA/210 (second sheet) (July 2022)

**INTERNATIONAL SEARCH REPORT**
**Information on patent family members**

International application No.
**PCT/JP2024/001658**

| Patent document cited in search report | Publication date (day/month/year) | Patent family member(s) | Publication date (day/month/year) |
|---|---|---|---|
| JP 2004-051670 A | 19 February 2004 | (Family: none) | |
| US 2020/0354537 A1 | 12 November 2020 | WO 2020/231650 A1 | |
| JP 9-100363 A | 15 April 1997 | (Family: none) | |
| JP 2013-213198 A | 17 October 2013 | WO 2013/133316 A1 | |
| JP 2012-182116 A | 20 September 2012 | US 2013/0309481 A1<br>entire document, in particular, claims, paragraphs [0021], [0071], [0096]-[0110]<br>WO 2012/105650 A1<br>EP 2672614 A1<br>CN 103370857 A<br>KR 10-2014-0052942 A | |
| JP 11-514680 A | 14 December 1999 | US 6239187 B1<br>entire document<br>WO 1997/016476 A1<br>EP 858476 A1<br>DE 19619813 A<br>DE 19540356 A1<br>CA 2236172 A<br>CN 1202188 A<br>KR 10-1999-0067203 A | |
| WO 01/68728 A1 | 20 September 2001 | JP 2002-88120 A<br>TW 574233 B | |
| JP 2002-201216 A | 19 July 2002 | (Family: none) | |
| JP 2003-096229 A | 03 April 2003 | (Family: none) | |
| WO 2006/068009 A1 | 29 June 2006 | US 2008/0300334 A1<br>entire document<br>EP 1829918 A1<br>CA 2563608 A<br>CN 1997695 A<br>KR 10-2007-0097403 A<br>TW 200621862 A<br>ES 2379535 T<br>MY 147796 A | |
| WO 2013/094461 A1 | 27 June 2013 | CN 103347941 A<br>KR 10-2014-0021539 A<br>TW 201331257 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013189484 A
- JP 11514680 W
- JP 11514680 T
- JP 11100454 A
- WO 2009041116 A
- JP 2017179238 A


### Non-patent literature cited in the description


- **YOSUKE HARAUCHI et al.** Development Trend of Cyclo-olefin Polymers (Zeon Corporation). *The society of polymer science, Japan, Kobunshi Ronbunshu*, November 2018, vol. 75 (6), 477-485, https://www.jstage.jst.go.jp/article/koron/75/6/75_2018-0025/_pdf
- **TEIJI KOHARA**. Development and Application of Cyclo-olefin Polymers. *Kobunshi*, August 2008, vol. 57, https://www.jstage.jst.go.jp/article/kobunshil952/57/8/57_8_613/_pdf
- **TEIJI KOHARA**. Development and Practical Application of Cyclo-olefin Polymers. *Polyimides and Aromatic Polymers, Recent Advances*, 2008, http://fibertech.or.jp/JPIC/pdf/2008_04.pdf